# EUROPEAN PATENT APPLICATION

(11) **EP 1 777 655 A1**
(43) Date of publication of application: **25.04.2007**
(21) Application number: 06255284.9
(22) Date of filing: 13.10.2006
(51) Int. Cl.: G06Q 40/00

(54) **System, method, and software for assessing temporal stability of a trading platform**

(30) Priority: 14.10.2005 US 727284 P
(71) Applicant: Hotspot FX, Inc., Watchung NJ 07069 (US)
(72) Inventor: Leibowitz, Steve, Las Vegas, Nevada 89123 (US)
(74) Representative: MacDougall, Alan John Shaw

(57) **Abstract**

A computerized trading system for facilitating transactions of financial instruments between a plurality of traders. The computerized trading system includes a bid and offer recorder that records trader bids and offers. A matching engine matches the bids and offers and trade restrictor monitors the timing of the bids and offers to detect instability in communications or processing or other systems. If the timing of the bids and offers, for example, exceeds a threshold as the bids and offers are received by the bid and offer recorder, or are processed by the trade restrictor, then the bids and offers will be held off of the trading platform. Once the instability is no longer present, e.g., the delays drop below the threshold time, the trade restrictor is configured to resume placement and matching of the bids and offers via the matching engine.

## Description

### BACKGROUND OF THE INVENTION

### 1. Field of the Invention

The present invention is related to systems, methods and computer program products to match trades for financial transactions between buyers and sellers, and more particularly to systems, methods and computer program products that can selectively restrict trades between traders to, among other things, improve the stability and integrity of the system.

### 2. Description of Related Art

Foreign exchange trading often involves the use of substantial credit or margin to allow the purchase of large amounts of currency. Existing computer systems for matching foreign exchange bids and offers often confirm that sufficient credit is available between parties prior to matching a bid and an offer. If sufficient credit is not available between the parties, the trade is blocked.

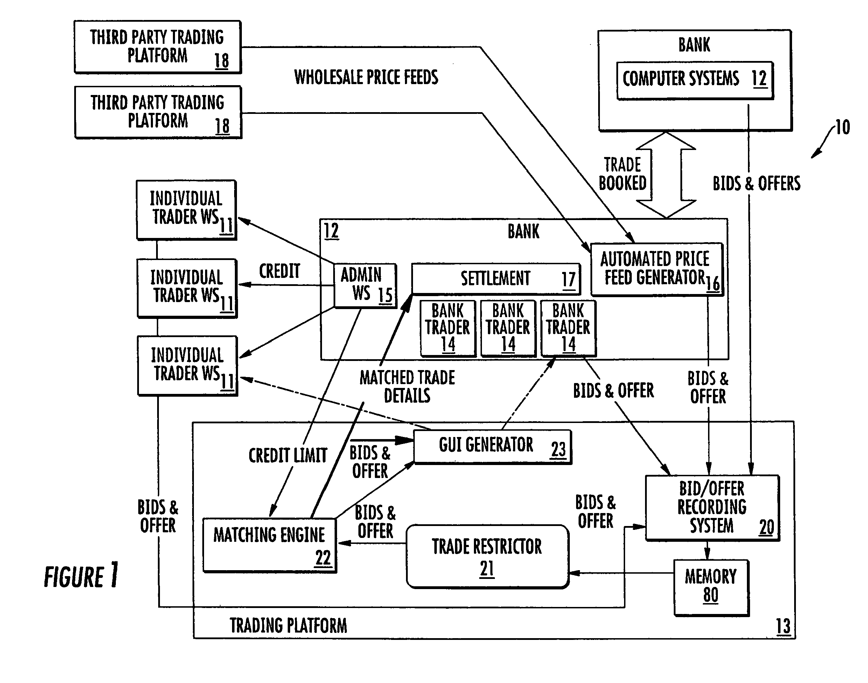

For example, U.S. Patent No. 5,375,055 to Togher et al. ("Togher") discloses an electronic trading system interconnecting a plurality of trader workstations, WS, for facilitating the buying and selling of large blocks of foreign currency, as shown in Figure 1 of Togher. Subgroups of the plurality of trader workstations are attached to market access nodes, MAN, which are under the control of an administrator (*e.g.*, a bank) and maintain transaction records, credit limits and other confidential information, as described at column 5, lines 10-15 of Togher. Arbitrator nodes, ARB, identify matches between buyers and sellers, as described at column 5, lines 25-30 of Togher.

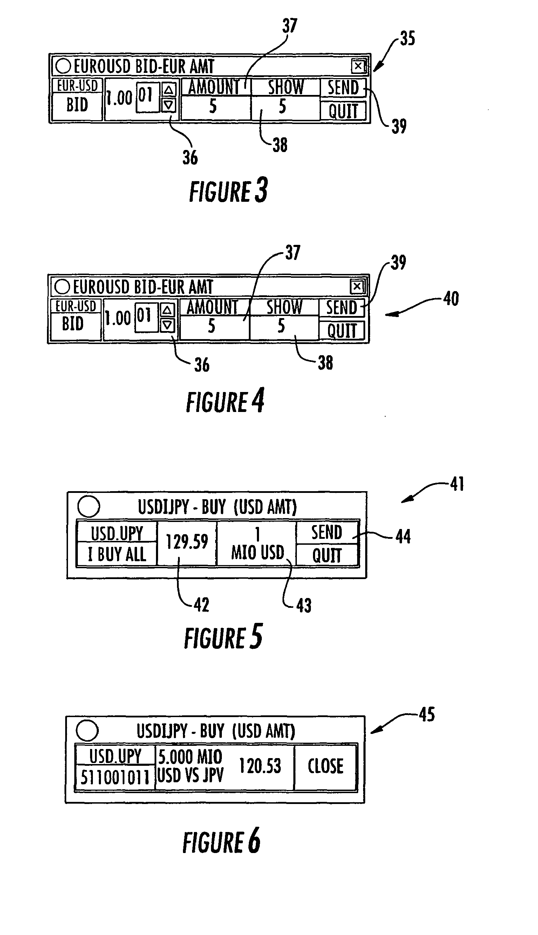

Each of the market access nodes contains detailed credit information on potential traders. The credit information indicates the amount of credit a particular market access node is willing to extend to each possible counterparty trader, as described at column 2, lines 48-57 of Togher. These credit limits are used to create preauthorization matrices which simply indicate whether credit is or is not available between potential counterparties, as shown in Figure 6 of Togher. In one aspect, Togher discloses that the arbitrator node can display an offer or bid as dealable to the workstation, while allowing the respective market access node the ability to block the above limit portion of the trade. In another aspect, the entire trade may be blocked, as described at column 3, lines 1-10 of Togher. Ostensibly, maintaining the more detailed credit information only on at the market access node preserves the anonymity of the traders.

U.S. Patent Application Publication No. 2003/0088499 to Gilbert et al. ("Gilbert") discloses an electronic trading system 101 having local workstations 102 and remote workstations 104 connected via networks 108 and 110 to a processor 106, as shown in Figure 1 of Gilbert. Bids and offers submitted by the workstations are communicated over the networks to the processor to be ranked and stored in a bid and offer queue, as described in paragraph 25 of Gilbert. These bids and offers are sent to a display 200 that is associated with an interface 300 presented on a trader's workstation for hitting or lifting.

Traders acting at one of the workstations as a broker trader, on behalf of a principal trader, are subject to a special designation and limitations by the trading system. For example, a trader acting for a principal may be permitted to hit bids of broker traders only when those broker traders are representing certain principals, as described in paragraph 32 of Gilbert. Figure 5 of Gilbert illustrates a process 500 for the setting of switches by the principal to selectively limit trades with various counterparties. In the process, bids and offers are displayed with color coding, or other indications, that a bid or offer is or is not available based on those switches, as described at paragraph 44 of Gilbert.

Despite the ability of the financial trading system of Togher to block trades based on credit information and the financial trading system of Gilbert to block trades based on a counterparty's identity, further centralized controls over trading are needed, especially on systems for facilitating the exchange of foreign currencies. At the same time, due to the generally decentralized market for foreign currencies, as compared to those for securities such as stocks and bonds, any limitations to the trading of currencies by a foreign currency exchange trading system must be carefully considered so as to avoid excessive interference with the liquidity and depth of the market hosted by the system.

Therefore, it would be advantageous to have a system for facilitating the exchange of financial instruments that can exercise further controls over the trading of financial instruments, especially the trading of foreign currencies while improving the stability and integrity of the system. In addition, it would be advantageous if the controls optimized and enhanced the liquidity of the market hosted by the system, especially the liquidity of a foreign currency exchange market.

### BRIEF SUMMARY OF THE INVENTION

The present invention addresses the above needs and achieves other advantages by providing a trade restrictor that senses and deflects temporal instability in a computerized trading system for facilitating transactions of financial instruments between a plurality of traders. The computerized trading system includes a bid and offer recorder that records trader bids and offers. A matching engine matches the bids and offers and the trade restrictor monitors the timing of the bids and offers to detect instability in communications or processing or other systems. If the timing of the bids and offers, for example, exceeds a threshold as the bids and offers are received by the bid and offer recorder, or are processed by the trade restrictor, then the bids and offers will be held off of the trading platform. In one aspect, once the instability is no longer present, *e.g.*, the delays drop below the threshold time, the trade restrictor is configured to resume placement and matching of the bids and offers via the matching engine.

In one embodiment, the present invention includes a computerized trading system for facilitating transactions of financial instruments between a plurality of traders. Included in the computerized trading system is a bid and offer recorder that is connected in communication with the traders and is configured to record a plurality of bids and offers from the traders. Each of the bids and offers has transaction information, such as a timestamp, a price, a quantity and a type of financial instrument. A matching engine is connected in communication with the bid and offer recorder and is capable of receiving the bids and offers from the bid and offer recorder. The matching engine is configured to compare the bids and offers and match the bids and offers using the price, quantity and type of financial instrument associated with each of the bids and offers. A trade restrictor of the computerized trading system is connected in communication with the bid and offer recorder and the matching engine. The trade restrictor is configured to restrict booking of the bids and offers based on the timestamp of each of the bids and offers.

Timing of the bids and offers can be monitored in a number of ways, such as by the computerized trading system including a clock. In this instance, the bid and offer recorder is connected in communication with the clock and is further configured to associate a second timestamp with each of the bids and offers. The trade restrictor is further configured to determine a delay between the first and second timestamps of each of the bids and offers and restrict booking of the bids and offers based on the delay. For example, the trade restrictor may be configured to block bids and offers having a delay exceeding a predetermined threshold (*e*.*g*.*,* 150 milliseconds) from matching by the matching engine.

In another aspect, the trade restrictor is connected in communication with the clock and is further configured to screen the bids and offers based on additional criteria. The trade restrictor, after the additional criteria screening, associates a third timestamp with each of the bids and offers. The trade restrictor is further configured to determine a second delay based on the third timestamp and block bids and offers having the second delay exceeding the predetermined threshold from matching by the matching engine.

Optionally, the transaction information of the bids and offers may further include a source identity. This information can be used by the trade restrictor to block all of the bids and offers having the same source identity from matching by the matching engine when, for instance, the predetermined time thresholds have been exceeded by a particular bank or market maker.

In addition to blocking trades, the trade restrictor may also be configured to discontinue blocking of the bids and offers when the delays return to less than the threshold.

The present invention has many advantages. For example, the temporal stability filter of the present invention is capable of determining whether orders originate from, or have passed through, stable systems. For example, the temporal stability filter protects market participants in cases where their rates are not reaching the platform in a specified time. Upon detection of excessive latency when an event occurs relative to an order (*e.g*., when it is first received), current orders on the platform from the user are canceled and future orders from the user rejected under stability has been reestablished.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
Figure 1 is a schematic of a computerized trading system of one embodiment of the present invention;
Figure 2 is a collection of GUIs, including trade entry, open positions, deal log and credit GUIs, generated by the computerized trading system of Figure 1;
Figure 3 is a bid box generated by the computerized trading system of Figure 1;
Figure 4 is an offer box generated by the computerized trading system of Figure 1;
Figure 5 is a lift window generated by the computerized trading system of Figure 1;
Figure 6 is a trade confirmation window generated by the computerized trading system of Figure 1;
Figure 7 is an average log screen generated by the computerized trading system of Figure 1 and displaying an all deals tab;
Figure 8 is the average log screen of Figure 7 displaying an averaging tab;
Figure 9 is the average log screen of Figure 7 displaying a final tab;
Figure 10 is a re-price balance window generated by the computerized trading system of Figure 1;
Figure 11 is a single layer feed message generated by the computerized trading system of Figure 1;
Figure 12 is a multi-layer feed message generated by the computerized trading system of Figure 1;
Figures 13a and 13b are a flow diagram of operation of a trading platform according to another embodiment of the present invention;
Figure 14 is a schematic of a trading platform according to another embodiment of the present invention;
Figure 15 is a flow diagram of operation of an inverted market filtering module according to another embodiment of the present invention;
Figure 16 is a flow diagram of operation of a choice market filtering module according to another embodiment of the present invention;
Figure 17 is a flow diagram of operation of an expected range filtering module according to another embodiment of the present invention;
Figure 18 is a flow diagram of operation of an intentional skew filtering module according to another embodiment of the present invention;
Figure 19 is a flow diagram of operation of time interval filtering module according to another embodiment of the present invention;
Figure 20 is a feed message with a time stamp of another embodiment of the present invention generated by the computerized trading system of Figure 1;
Figure 21 is a flow diagram of operation of a temporal stability filtering module according to another embodiment of the present invention; and
Figure 22 is a schematic representation of a system configured for implementing a trading platform capable of performing temporal stability filtering, the system being configured in accordance with an embodiment of the present invention.

### DETAILED DESCRIPTION OF THE INVENTION

Embodiments of the present inventions now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. Like numbers refer to like elements throughout.

Referring to Figure 1, therein is shown a representation of a computerized trading system 10 in accordance with one embodiment of the present invention. The computerized trading system includes a plurality of individual trader workstations (WS) 11 and a plurality of bank computer systems 12 communicating, for example, via electronic connection, with a computerized trading platform 13. Generally, system 10 may include multiple bank computer systems 12, with groups of the trader workstations 11 being associated, respectively, with individual bank computer systems 12. The bank computer systems 12 extend credit to the traders of each of their respective workstations, allowing them to submit bids and offers for financial instruments on the trading platform 13. The trading platform 13 communicates bids and offer information between the various trader workstations 11 and the bank computer systems 12 and matches bids with offers so as to facilitate closing of matched bids and offers for the financial instruments.

The term "bank" as used herein denotes generally any institution, individual, firm, or other entity that has sufficient resources to extend credit to traders for use in trading financial instruments. For instance, the bank can be a brokerage, a lending institution, or a trusted individual with known financial resources. The term "financial instruments" as used herein denotes any type of property, such as stock, bonds, futures, derivatives, foreign exchange contracts, commodities, golf memberships, collectibles, etc., or any other property interest, real, intangible, or otherwise, that can be exchanged for consideration. It should be also noted that the term "network" as used herein should be construed broadly to include all types of communications networks, including electronically-assisted communication networks, such as wireless networks, local area networks ("LAN"), wide area networks ("WAN"), public networks such as the Internet, public telephone networks, or various combinations of different networks, as well as optically-assisted networks.

Referring still to Figure 1, each of the bank computer systems 12 may have a collection of computers interconnected via a network, such as a LAN, including a plurality of bank trader workstations 14, one or more administrative workstations 15, an automated price feed generator 16, and a settlement system 17. Generally, each bank computer system and the component computer systems thereof communicate, over one or more networks, with the other computer systems of the computerized trading system 10 (this communication is at least partially represented by the lines indicating exemplary flows of data). In one aspect, communication may be facilitated through the provision by the computerized trading platform 13 of an application programming interface (API). The API may include a template defining the format of communication messages and a library of functions that are made accessible to the other computer systems.

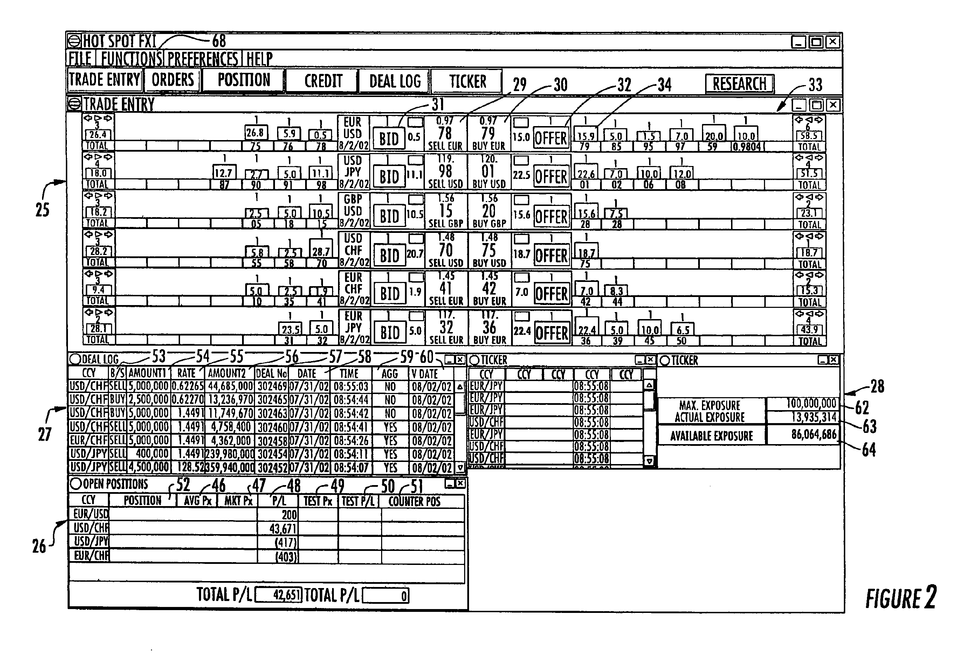

In the illustrated embodiment, the bank trader workstations 14 include computers that are in communication (*e.g.*, connected in electronic communication, such as via a network) with the trading platform 13. Some workstations 14 may be capable of displaying a plurality of graphical user interfaces (GUIs) that allow the bank traders to interact and exchange information with the trading platform. These GUIs, for instance, may allow the bank traders to submit bids and offers and to receive and display the bids and offers of other traders, as well as information regarding completed trades, open positions, and credit exposures. The various GUIs for interacting with the trading platform will be described in more detail below in relation to Figures 2-10.

At least some of the administrative workstations 15 can also include computers in communication with the trading platform 13. The administrative workstations 15 may be configured to manage credit limits and to enable the traders and the individual trader clients of an associated bank. For instance, some administrative workstations 15 may, through the use of various GUIs, record and send information to the trading platform 13 describing credit limits for each of the individual trader workstations 11 and bank trader workstations 14 associated with that administrative workstation 15 (this communication is indicated at least partially by the solid line of Figure 1). In addition to changing the credit limits of its own trader workstations, the administrative workstations 15 can send information to the trading platform 13 for setting and changing the credit limits extended to other banks and traders. Typically, however, credit limits will not be set for the traders of other banks, but only for the other banks as a whole, so as to preserve the anonymity of the traders.

At least some of the administrative workstations 15 may be configured to control access to the trading platform 13 by the workstations 11, 14. For instance, such administrative workstations 15 might disable an individual workstation 11 so that the individual trader can view trade information, but cannot trade using the trading platform 13, or so that the individual trader can neither view information nor trade using the trading platform. Credit and enablement information may be stored on servers or other computers of the trading platform for use thereby in controlling access to the platform and in the matching of bids and offers.

The automated price feed generator 16 may include a computer system in communication with one or more third party trading platforms 18. Trading platforms 18 supply continuous wholesale pricing data on one or more financial instruments. The automated price feed generator 16 is configured to receive the wholesale pricing data from third party trading platforms 18 and apply various formulae developed by the bank to generate an automated price feed of bids and offers for use on the trading platform 13. Typically, the automated price feed generator takes the bids and offers from other markets and adds some measure of spread that allows the bank to undertake offsetting transactions in the two markets and capture the value of the spread. The automated price feed generator 16 may also transmit the automated bids and offers to the trading platform 13, such as via a network.

In other embodiments, the automated price feed generator 16 can be configured to automatically generate bids and offers without the use of wholesale price feed data from third party platforms. For instance, the market making bank can use internal data, or various analytical processes, to generate a price feed without other price feed inputs. Alternatively, the price feed could be generated through the use of outside inputs other than, or in addition to, wholesale price feeds, examples of such inputs including information on world events, interest rates, etc. Regardless, the term "automated" or "automated price feed" as used herein refers to any at least partially machine-generated series of bids and/or offers.

Advantageously, these automated price feeds provide additional market depth for the individual trader workstations 11 and revenue for the banks who are acting as market makers. However, dealing by one bank on the automated price feeds of another bank can be problematic. The automated price feeds hosted by a bank are motivated in part by a desire to provide liquidity to the market. However, when the price feeds of one bank temporally lag those of another bank, the result can be the matching by one bank of the price feeds of the other bank and a concomitant reduction in the liquidity of the market. Dealing on the price feeds by bank trader workstations 14 may also cause problems due to the competitive nature of the relationship between the banks.

Embodiments of the computerized trading system 10 of the present invention may avoid the above described disadvantages by selectively restricting market maker-to-market maker trading and/or trading on automated price feeds between market makers, *i.e.*, to restrict trading based also on participant type or identity. This provides liquidity to the traders, but avoids giving market makers access to the liquidity of other market makers. Notably, not all banks will include the automated price feed generator 16, as some banks will not act as market makers, or will manually supply bids and offers as a market maker. Therefore, the present system may also restrict transactions between market makers on non-automated bids and offers.

Still referring to Figure 1, the settlement system 17 may communicate with and receive details on potential trades, or "matches" (*i.e.*, those trades for which bid and offer price terms are consistent by some specified measure) from the trading platform 13. This information may be used by the settlement system 17 for clearing purposes, that is, for actually completing the trades at the prices, quantities, etc. associated with the matched bids and offers. This process is indicated by the arrow marked "trade booked," between the bank computer systems 12. The details of matched trades can also be sent to the various trader workstations 11, 14, possibly for display thereon, either from the settlement system 17, directly from the trading platform 13, or via other, less direct sources and/or processes. It should be noted that although booking of trades is implemented in the above-described embodiment, trades could be booked directly between individuals, with clearinghouses, etc., and still be within the scope of the present invention.

Notably, the settlement system may involve the use of non-electronic, non-computer systems to complete the final transfer of ownership to the financial instruments and consideration therefore. Similarly, each of the systems described herein, in various embodiments, may include a collection of manual and automated processes and components. To this end, the term "computerized" as used herein denotes the use of various electronic and automated processes, but not necessarily an entirely electronic and automated process.

The trading platform 13 of the computerized trading system 10 includes a receiving and recording system 20 for bids and offers, a memory 80 for storing the bids and offers, a trade restricting system 21, a matching engine 22, and a GUI generator 23. The recording system 20 is configured to receive bid and offer information submitted by individual trader workstations 11, the bank trader workstations 14, and the automated price feed generator 16. The recording system 20 is also configured to communicate the bid and offer information to the trade restricting system 21.

The bid/offer recording system 20 may work in coordination with a plurality of GUIs generated by the GUI generator 23. The GUIs may be used to prompt the input of various bids and offers from the individual and bank traders. Once inputted, the bids and/or offers are recorded in and processed by computerized trading system 10. It should be noted that GUIs are not necessarily involved in submitting the automated bids and offers to the bid/offer recording system 20, although GUIs may be employed to initiate and/or monitor such automated bids and offers. Further, the GUIs may be generated and associated with the bank computer systems 12, or the workstations 11, 14, and in such case, the bid/offer recording system 20 and the trading platform 13 would only see bid and offer messages, without concern for any associated GUIs. The manners in which the GUIs prompt user interaction are discussed in more detail later.

The trade restrictor 21 may determine whether the bids and/or offers are automated or bank originated for the purposes of selectively restricting matching between automated and bank-originated bids and offers. Trade restrictor may be configured, for example, to receive and parse an electronic bid/order message to determine its format, content, and/or source. Further, trade restrictor 21 may determine whether bids/offers are latent, stale, or "off-market" (*i*.*e*., not dictated completely by market economics) for the purposes of canceling or adjusting them to reflect expected market conditions. In the case of non-automated bids or offers, the trade restricting system 21 can be configured to send such bid or offer messages directly to the matching engine 22.

Trade restrictor 21 can also be configured to determine whether the bid/offer message has been manually submitted by one of the bank trader workstations 14, for example, by comparing a user name included in or associated with the bid/offer message to a list of known bank traders, or by use of a code indicating whether the trader is or is not a bank trader. If the trader is not a bank trader, the trade restrictor 21 may discard the bid/offer message. If the trader is a bank trader, the trade restricting system 21 is configured to forward the bid/offer message to the matching engine 22 for matching with another price.

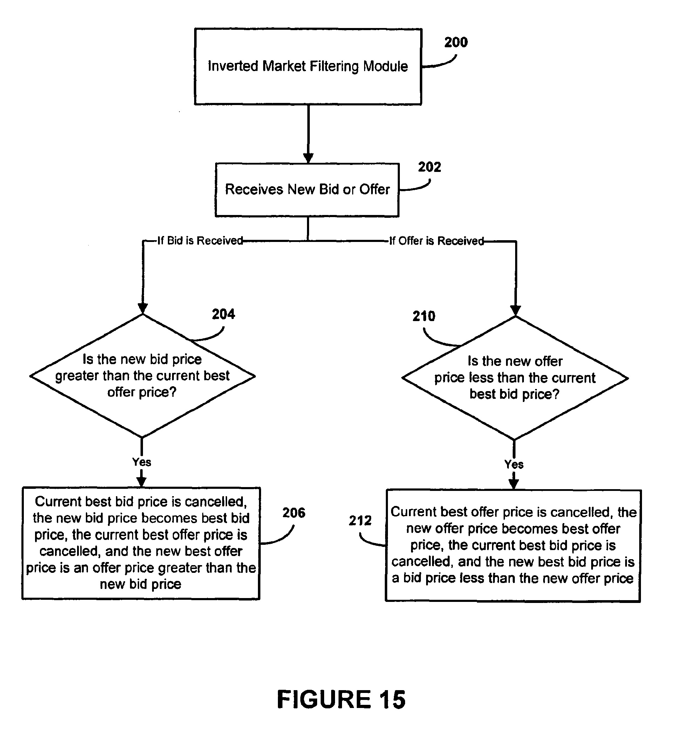

In some embodiments, the trade restrictor 21 is configured to determine whether bids and offers meet a range of trader specified off-market criteria. This can be done, for example, by incorporating one or more filters into the trade restrictor 21 to limit or inhibit trades of a certain character or variety when a filter indicator is included with a bid/offer message. Examples of filters that might be included in the trade restrictor 21 and selectable by the trader include an inverted market filter, a choice market filter, an expected range filter, an intentional skew filter, a time interval filter, and a temporal stability filter, all of which are described in more detail below in relation to Figures 15-19 and 21. If one or more filters are selected, the trade restrictor 21 can screen a new bid/offer message and the bids/offers in the system to determine if any of the bids and/or offers meet the off-market criteria defined by each selected filter. If a bid/offer does not meet off-market criteria, the trade restrictor 21 can forward the bid/offer message to the matching engine 22 for matching with another price. If a bid/offer message does meet the off-market criteria, the trade restrictor 21 can cancel the bid or offer, can notify the trader that the bid or offer did meet the off-market criteria, or can adjust the bids/offers.

The matching engine 22 is configured to receive a bid/offer message and determine whether the asking price matches the asking price of any existing offers/bids. In some cases, a "match" in asking price may mean equality, while in other cases, "match" may simply refer to a bid (offer) price that is at or above (at or below) the existing asking price. The matching engine 22 can be configured to send any unmatched bids/offers to the GUI generator 23 for possible display on various trader workstations 11, 14. For matched bids, the matching engine 22 is configured to reconfirm that at least one of the matched bid and offer is not automated. This can be done either by reprocessing the bid/offer message at the matching engine 22 or by sending the messages to the trade restricting system 21 for processing and confirmation.

If both the bid and offer involved in a match are automated, the original orders (the bid and offer each being an "order") may be continuously displayed for the workstations 11, 14 while separate matching of the bid and offer is re-attempted. If one of the orders is not automated, a credit check may be performed by the matching engine 22 to assure that the potential trade is within credit limits specified for the involved banks, as well as to assure compliance with any credit limits associated with the workstations from which the orders have been entered.

If the match is within all applicable credit limits, the matching engine 22 may be configured to process the match and send the details of the matched trade to the respective bank settlement systems 17. Details of the trade can also be sent to the GUI generator 23 for possible processing by the trader, or in the background, in a manner described in more detail below. The matching engine 22 is also configured to calculate any unmatched quantity remaining after a match has been found and approved, and further matching can be attempted for this unmatched quantity. Note that further matching may similarly be attempted if either of the bid or the offer specifies a reserve quantity, for example, as indicated in the bid/offer message.

Notably, the trade restrictor 21 can also be configured to selectively block or inhibit the matching of manually placed, bank originated bids/offers with automatically generated offers/bids. Further, the trade restrictor 21 could also be configured to selectively block or inhibit market maker-to-market maker transactions. Still another configuration of the trade restrictor 21 would allow for restricting the matching of trades below or above certain quantities, based on trader identity.

It should be noted that detection of automated trade requests is not limited to the above-described parsing of a bid/offer message to find some indicator of automation. Embodiments of the trade restrictor 21 may be configured to detect automated and/or bank originated bids/offers in many ways and still be within the purview of the present invention. For instance, the trade restrictor may be able to examine the characteristics of a requested bid/offer and deduce that it is an automated bid/offer, such as by the presence of cancellation data, the delay between the bid/offer and previous similar bids/offers. Advantageously, such systems could be employed to screen bids/offers with unrecognized formats. Also notable is that the trade restrictor could be configured to inhibit automated trades in other ways, such as by inquiring of the trading parties as to whether to match a trade, whether to slow the matching of the trades, etc.

Bids, offers, and other transaction information may be displayed by, and recorded from, the trader workstations using a collection of trading GUIs. These GUIs are typically generated by a combination of hardware and software, such as might be associated with the workstations 11, 14 and the trading platform 13. The hardware and software may be distributed between different systems of the computerized trading system, such as the workstations 11, 14 and the trading platform 13, so as to maximize the speed of data transmission between the systems associated with the trade. However, the GUIs can be generated in a number of ways using various networks, software, hardware and other components as described above.

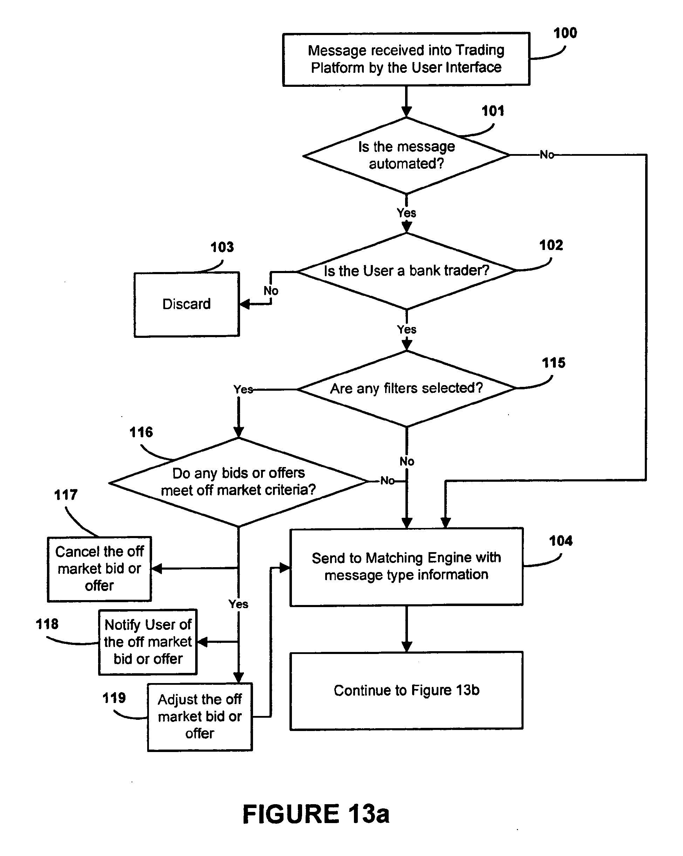

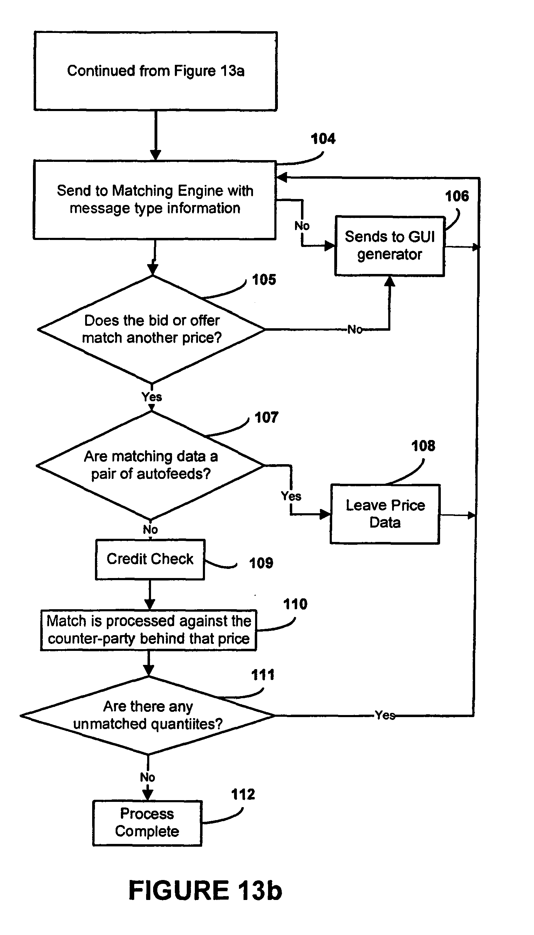

Referring to Figures 13a and 13b, therein is shown a block diagram representing the sequential operation of a trading system configured in accordance with an embodiment of the present invention, for example, an embodiment similar to the embodiment illustrated in Figure 1. At Block 100, a bid and/or offer message is received into the trading platform (*e*.*g*., 13 of Figure 1). The message can be transmitted from a number of sources, including an individual trader workstation and/or a bank computer system. In some cases, GUIs may be used to prompt the input of various bids and offers from the individual and bank traders, the GUIs being generated by a GUI generator (*e.g.*, 23 of Figure 1).

At Block 101, a determination is made as to whether the message is automated. For example, this may be done by a trade restricting system (21 in Figure 1). If the message is not automated, at Block 104 the message is sent to and received by a matching engine (*e.g.*, 22 in Figure 1) along with any message type information for matching with another bid/offer; operation at and beyond the matching engine is described in more detail below. However, if the message is automated, at Block 102 the trader is identified as either being a bank or another entity. This identification can be performed by the trade restricting system, for example, by comparing a user name associated with the bid/offer message to a list of known bank traders or by use of a bank trader identification code. If the trader is not a bank, the message is discarded by the system at Block 103 and the process ends with respect to the discarded message. If the trader is a bank, the message is forwarded to the matching engine.

Before being forwarded to the matching engine, selected filter requirements, if any, may be determined for the above described message at Block 115. This is done, for example, by the trade restrictor. If no filtering has been selected, the message is sent at Block 104 to the matching engine with any associated message type information. If filters have been selected, a determination is made at Block 116 as to whether any bids/offers meet the off-market criteria specified by the filters. If any bids/offers meet the off-market criteria, the bid or offer can be canceled, the trader can be notified that the bid/offer did meet the off-market criteria, or adjust the bids/offers can be adjusted, as shown by Blocks 117, 118 and 119, respectively. All of these functions may be carried out by the trade restrictor. If, on the other hand, no bids/offers meet the off-market criteria, the bid/offer message is sent to the matching engine at Block 104.

After the bid/offer message has been forwarded to the matching engine, at Block 105 the message and any associated message type information is evaluated to determine whether the bid or offer matches another offer/bid received by the matching engine. If a matching offer/bid is not available, at Block 104 the message is sent back to the matching engine for another attempt at matching. A GUI may also be displayed at Block 106 alerting the trader that the bid/offer has not been matched.

If a matching offer/bid is identified, the matching data is evaluated at Block 107 from both the potential buyer and potential seller sides of the potential trade to determine whether the trade is a matching of automatic price feeds. If both the bid and offer are automated, then the trade is not completed and the bid/offer message is sent back to the matching engine at Block 104 for another attempt at matching. The original bid and offer may also be kept on display at Block 108, for example, at trader workstations (such as 11, 14 of Figure 1).

If one of the orders is not automated, then at Block 109 the credit extended between the involved banks can be checked, for example, by the matching engine, and the credit limits associated with the workstations from which the orders were placed can be confirmed. If the match is within all applicable credit limits, at Block 110 the match is processed, for example, by the matching engine. Details of the matched trade may be sent to the respective banks, for example, to respective bank settlement systems (17 in Figure 1), and to the GUI generator for possible processing by the trader (possible examples of such processing are discussed in more detail below).

After the match has been found and approved, at Block 111 unmatched quantities from the bid and/or offer are calculated, for example, by the matching engine. The unmatched quantities are routed back to the matching engine at Block 104 for further matching. In some cases, bids/offers may include reserve quantities, and in these cases, the reserve quantities would similarly be routed back to the matching engine for further matching. If there is no unmatched quantity between the matched bid and offer (and there are no reserve quantities specified), the process is closed out at Block 112.

As discussed previously, one or more filters can be included in embodiments of the present invention, for example, in the trade restrictor 21 of Figure 1. The filters may act to restrict, inhibit, and/or limit certain varieties of trades, such as to detect stale, latent, or off-market bids/offers and to prevent the off-market bids/offers from being booked by the trading system. One or more filters may be selectively enabled and/or configured by a trader or user to screen the bids and offers, possible filters including an inverted market filter, a choice market filter, an expected range filter, an intentional skew filter, and a time interval filter. User filter enablement and/or configuration can be accomplished, for example, by including filter and/or filter parameter indicators in a bid/offer message (examples of this are provided later).

Filters can also be enabled/disabled and parameters needed for those filters can be communicated to the server in other ways. For example, a separate message may be sent from the client to the server in response to a bank trader's change of a parameter on his trading screen. As another example, a predetermined, perhaps static setting may be loaded into the server when it is initialized, that setting being utilized thereafter to restrict trades associated with that server.

Referring to Figure 15, therein is shown a flowchart representing the sequential operation of an inverted market filter 200 configured in accordance with an embodiment of the present invention. In a typical market, the best bid price is slightly lower than the best offer price, reflecting the principal that buyers want to buy at the lowest price possible and sellers want to sell at the highest price possible. However, if the best bid price is greater than the best offer price, then the market is considered inverted because the buyer is willing to pay more than the price at which the seller is willing to sell. Therefore, the inverted market filter may be configured to assume that if the new bid price is higher than the current best offer price, then the current best bid price and best offer price are latent or stale and should be updated. Similarly, if the new offer price is lower than the current best bid price, then the current best offer price and the best bid price are assumed to be latent or stale and should be updated. The table below illustrates an example how the inverted market filter affects the best offer price and best bid price in the system.

| | Best Bid Price | Best Offer Price |
|---|---|---|
| Existing Market | 50 | 52 |
| New Prices | 53 | 55 |
| Market without using Inverted Market Filter | 53 | 52 |
| Market using the Inverted Market Filter | 53 | 55 |

To accomplish inverted market filtering, in Block 202, the filter receives the new bid or offer. If a new bid is received, the new bid price is compared to the current best offer price in the system in Block 204. If the new bid price is greater than the current best offer price, the current best bid price is cancelled, the new bid price becomes the new best bid price (assuming that it is higher than the original best bid price), the current best offer price is cancelled, and the new best offer price is reset to the closest (in sequence or in amount) offer price that is higher than the new bid price, as shown in Block 206. In this instance, then, the new best offer price is detected to deviate from a range of prices that do not cause an inverted market, and the new best offer price is "restricted" by being replaced with an offer price that does not cause the inverted market criteria.

Notably, although the trade restrictor is described as replacing bids and offers that cause the market to be inverted with those that do not, the bids or offers may simply be cancelled or presented to the trader for modification, cancellation or approval. Therefore, the term "restricted" should be construed broadly to include modification, cancellation, or seeking approval so as to avoid display, matching, and ultimately booking, of the restricted bid or offer without some intervening process.

Similarly, if a new offer is received in Block 202, the new offer price is compared to the current best bid price in the system in Block 210. If the new offer price is less than the current best bid price, the current best offer price is cancelled, the new offer price becomes the new best offer price, the current best bid price is cancelled, and the new best bid price is a bid price that is lower than the new offer price, as shown in Block 212.

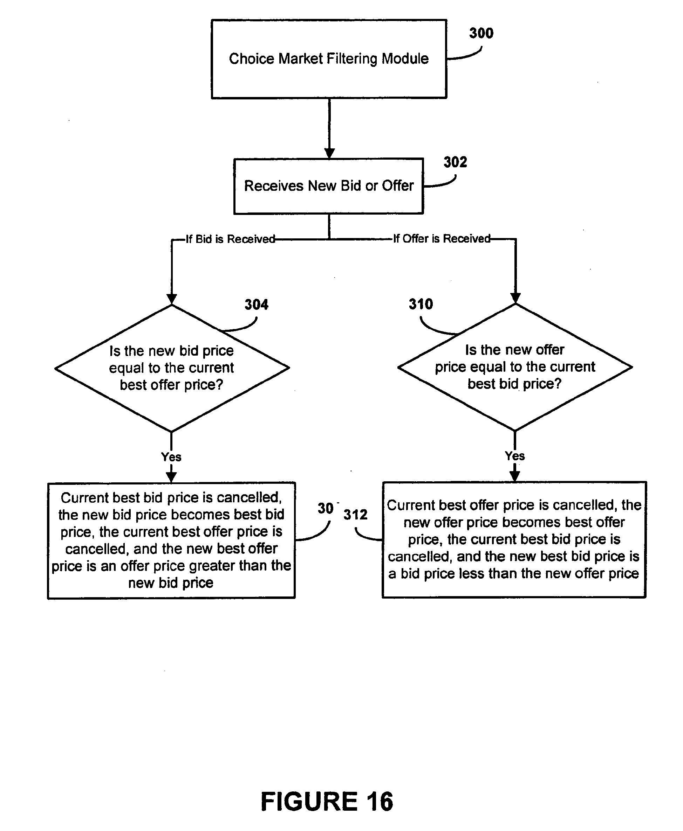

Referring to Figure 16, therein is shown a flowchart representing the sequential operation of a choice market filter 300 configured in accordance with an embodiment of the present invention. A choice market is one in which the best bid price and best offer price are equal. The choice market filter 300 receives a new bid or offer in Block 302. If a new bid is received, the filter 300 determines if the new bid price submitted is equal to the current best offer price in the system, shown in Block 304. Like the inverted market filter 200 described above, the choice market filter 300 assumes that if the new bid price is equal to the current best offer price in the system, then the current best bid price and best offer price are latent or stale and should be updated. If the new bid price is equal to the current best offer price, the system updates the best bid price with the new bid price and the best offer price with an offer price that is greater than the new bid price, as shown in Block 306.

Similarly, if a new offer is received, the filter determines if the new offer price submitted is equal to the current best bid price in the system, shown in Block 310. If the new offer price is equal to the current best bid price, the system updates the best offer price with the new offer price and the best bid price with a bid price that is lower than the new offer price, as shown in Block 312.

In another embodiment, if the new bid or offer price would result in an inverted or choice market, the inverted market filter 200 and the choice market filter 300 are configured to notify the submitting bank before updating the best bid and best offer price as described above. Upon notification, the bank has the opportunity to review the new bid or offer price for errors, change the new bid or offer price, or cancel it. If the bank intended to submit the new bid or offer price or another price that meets the off-market criteria for these modules, the modules are configured to update the best bid and offer prices with the approved bid or offer.

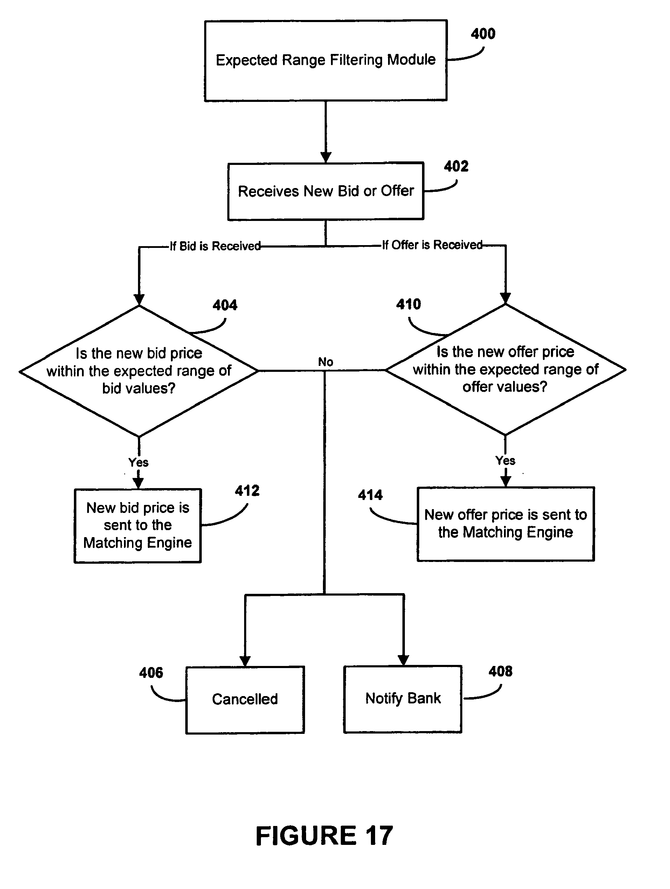

Referring to Figure 17, therein is shown a flowchart representing the sequential operation of an expected range filter 400 configured in accordance with an embodiment of the present invention. The expected range filter 400 detects new bid and offer prices that do not fall within a statistically defined range of values that would be expected by the market. The expected range filter 400 receives a bid or offer submitted by a bank market maker, shown in Block 402. The filter 400 then compares the new bid price to an expected range of bid values, as shown in Block 404, or compares the new offer price to an expected range of offer values, as shown in Block 410. In Block 406, the bid or offer is cancelled if the bank's new bid or offer falls outside of the respective ranges. Alternatively, as shown in Block 408, the trade restrictor can notify the submitting bank that the bid or offer fell outside the expected range and allow the bank trader to modify the bid or offer or choose to submit the original bid or offer without interference from the expected range filter of the trade restrictor. If the bid or offer falls within the expected range, the bid or offer is sent to the matching engine, as shown in Blocks 412 and 414.

The expected ranges used by the expected range filter 400 can be defined using maximum and minimum prices or volumes at which the trade restrictor expects new bids and offers to fall. For example, the maximum and minimum prices can be defined using one or more standard deviations, Bollinger Bands, or inflection points of a collection of recent or historical posted or matched bids and offers. Generally, this allows the expected ranges to be defined by current market conditions.

Alternatively, or in addition to defining the expected ranges by current market conditions, the expected ranges may be defined using the identities and past behaviors of a particular trader or group of traders (*e.g*., banks or market makers). For example, the expected ranges may be set at one or more standard deviations of the bid prices or offer prices submitted by a bank in past time period or similar situation, such as a during a bull market, a bear market, or when interest rates are rising or falling. Additionally, the expected range criteria can be set at one or more standard deviations of the volume of trades submitted by a particular bank in past transactions. Although standard deviations are described, the invention is not limited to standard deviations from sets of data, and alternative methods of defining statistical ranges are within the scope of the invention.

As noted above, the expected range could be determined by a bank to be within a certain number of standard deviations (can be chosen by each bank) to the running average. The standard deviations and running average can be standard or exponentially weighted (selectable by each bank), the amount of time (and or ticks) to include in the running average and standard deviation and the weighting factor can also be chosen by the bank. Alternatively, the bank could choose to use a straight percentage difference from the running average which the trader can modify in real time.

Other more complex methods based on stochastic calculus, momentum, Fast Fourier Transforms (FFT), binomial trees, neural networks and genetic algorithms, fuzzy logic, fractals, and/or chaos theory may be employed in the future as methods to determine the valid range for a given price, or to determine parameters for use in other models to identify an incoming price that is outside of the expected range.

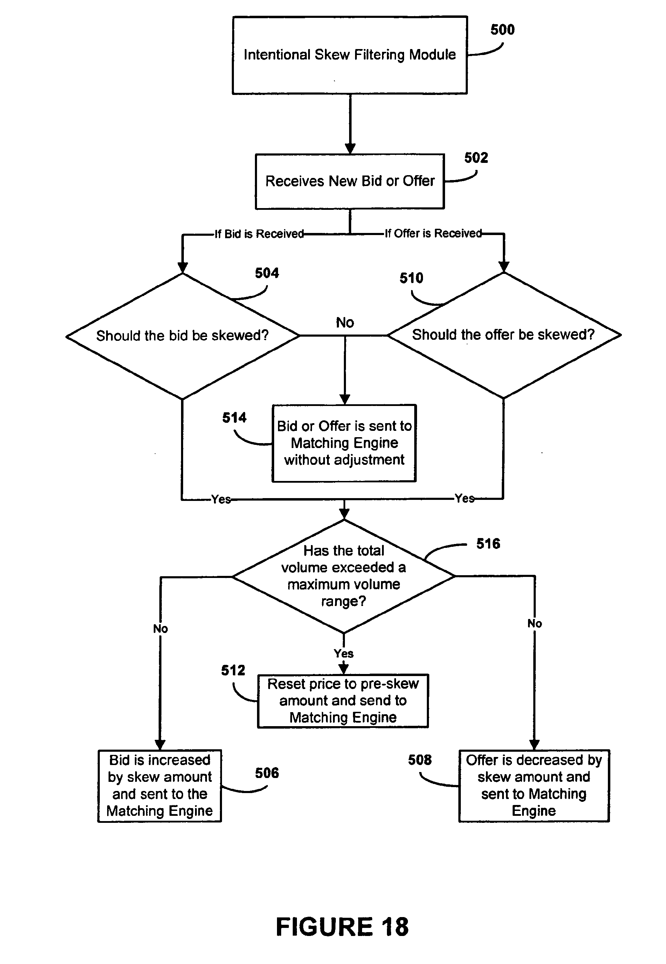

Referring to Figure 18, therein is shown a flowchart representing the sequential operation of an intentional skew filter 500 configured in accordance with an embodiment of the present invention. The intentional skew filter 500 allows the bank market maker to skew a bid or offer price to more aggressively pursue a particular financial instrument. The intentional skew filter 500, according to one embodiment, receives a new bid or offer in Block 502. In Blocks 504 and 510, the module 500 determines whether the bid or offer, respectively, should be skewed. This can be done, for example, by parsing the message containing the bid/offer and searching for an indication that skewing is desired. If the amount should not be skewed, the module 500 sends the bid or offer to the matching engine without adjustment, as shown in Block 514.

If the bid or offer should be skewed, the module 500 detects whether previous bids or offers have been made for the same financial instrument by the same buyer, and calculates a total volume of financial instrument transacted with an intentional skew. In Block 516 the logic of the intentional skew filter 500 is configured to determine whether the total volume has exceed a maximum volume range set by the trader, or determined statistically as described above. If the answer is no, the filter 500 increases the bid by the amount indicated in the bid message, or decreases the offer by the amount indicated in the offer message, and sends the bid/offer to the matching engine, as shown in Blocks 506 and 508, respectively. If the answer is yes in Block 516, the skew is reduced or the price is reset to its un-skewed amount in Block 512.

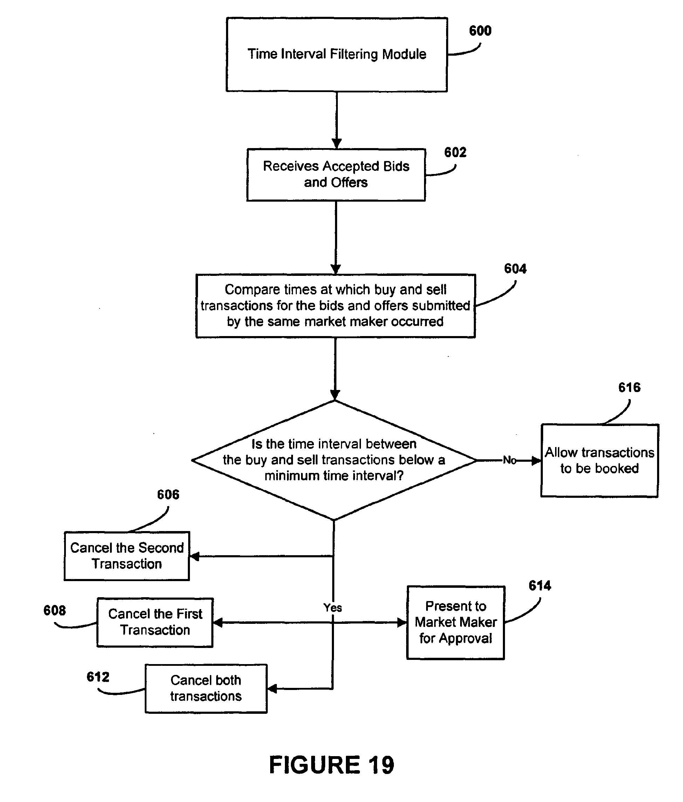

Referring to Figure 19, therein is shown a flowchart representing the sequential operation of a time interval filter 600 configured in accordance with an embodiment of the present invention. The time interval filter 600 prevents buy and sell transactions for bids and offers submitted by the same market maker from being accepted simultaneously or within a short time period by another trader or group of traders. In Block 602, the time interval filter 600 receives accepted bids and offers. Next, at Block 604, the filter 600 determines which traders submitted the bids and offers and which traders accepted them and compares the times at which the buy and sell transactions for the bids and offers were submitted or were matched. If the time interval is below a minimum acceptable time interval, the second transaction is cancelled, as shown in Block 606. Alternatively, the first transaction is cancelled, as shown in Block 608, or both the first and second transaction are cancelled, as shown in Block 612. In another alternative, in Block 614 both transactions are presented to one or both of the traders (in particular a bank or market maker trader) for manual approval before allowing the deal to be processed by the system. If the time interval does not fall within the minimum time interval, the transactions are allowed to be booked by the system, as shown in Block 616.

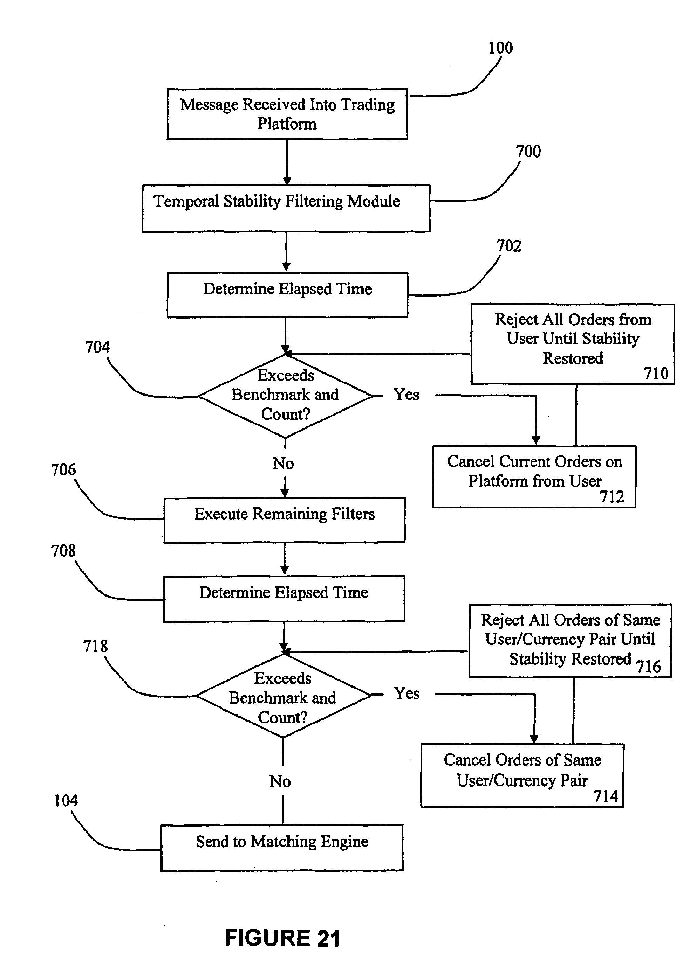

In one embodiment of the present invention, the temporal stability filter module 700, illustrated in Figure 21, prevents or inhibits posting, matching or booking of orders (bids and offers) and related orders based on time parameters associated with the orders. During temporal stability filtering of the illustrated embodiment, incoming bids, offers, and other orders are monitored for timeliness (which serves as an indicator of stability of the various computer systems) as the messages are received into the trading platform 13, as shown in Block 100.

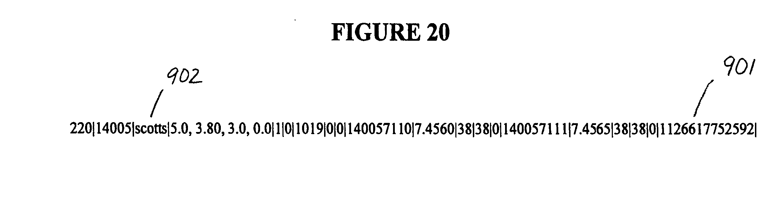

At Block 700 the temporal stability filter is initiated and proceeds to determine an elapsed time at Block 702 between message creation (or some other desired event) and its receipt at Block 100. For example, as the message, such as the message format shown in Figure 20, is received, a second timestamp is associated with the message and compared to the first timestamp in field 901 already appended to or associated with the message by the bank 12 or third party trading platform 18. Generation of the timestamp, for instance, can include consulting a clock, such as a processor clock of an associated computer, for a numeric string representing the current time. The first timestamp is extracted by parsing the message and then compared to the second timestamp, such as by subtracting the first timestamp from the second timestamp. This yields an actual elapsed time (*e.g*., 100 milliseconds or 200 milliseconds) between timestamps. However it should be noted that the elapsed time could be more abstract in nature and include only a number or series of events or other indicators that are more loosely associated with an elapsed time than the more precise elapsed time calculated by the illustrated embodiment.

At a Block 704, the temporal stability filter is configured to compare the elapsed time determined at Block 705 to a benchmark or threshold to determine whether the order is stale and likely indicative of an unstable system somewhere between the creation of the order message and its receipt at Block 100. For example, a benchmark may be 150 milliseconds. If the difference between the timestamps is 100 milliseconds, the benchmark is not exceeded and the logic is configured to also check for a flag placed by logic at Block 710 (explained below). The flag indicates ongoing rejection of orders due to a prior failure of a stability check. If the benchmark is not exceeded and no flag is present, the logic proceeds to Block 706 to execute the remaining filters, such as those filters illustrated in Figures 15-19.

If the difference between the timestamps is, for example, 200 milliseconds, the benchmark is exceeded and the logic proceeds to Blocks 712 and 710. Block 712 is logic configured to block the order associated with the message exceeding the benchmark and cancel all or a portion of current orders on the platform 13 from the same user, such as by collectively canceling all order messages sharing the same username in the username field 902.

Block 710 is configured to reject all incoming orders from the same user until receiving some indication that stability is restored, such as when the timestamps indicate messages that no longer exceed the benchmark as determined at Block 704. Block 710 may be implemented, for example, by setting a flag on incoming messages from the same user for a selected period of time, for a number of messages, or until some other criteria establishing a return to stability are met. For example, Block 710 may communicate with Block 704, or Block 704 may have its own logic, to determine a number of counts or increments at which the flag is detected before beginning to allow the order messages to pass through. If the order message passes the initial time check a reset count is reduced by one. This process is repeated with each time check under the threshold until the count is at zero before the order messages are allowed to pass through. Failure of another order message by exceeding the benchmark, however, causes Block 710 to start the reset count over at its maximum value.

After the remaining filters are executed at Block 706, Block 708, with logic similar to Block 702, is executed to determine a second, current elapsed time. For example, a third timestamp may be generated after completion of filtering and compared, similar to the second timestamp, to the first timestamp associated with the order message. Alternatively, the second and third timestamps could be compared to determine whether the filtering process is unstable. Logic the same as, or similar to, Block 704 is then executed at Block 718 to determine if this elapsed time exceeds a benchmark or if a flag has been set. The benchmark is likely different than the first benchmark time due to the increased time needed to execute Block 706 filters, but may also be the same, *e.g.*, 150 milliseconds. If the second benchmark is not exceeded and the reset count is zero, the logic proceeds to Block 104 (which is also shown in Figure 13) to send the order message to the matching engine 22.

If the second benchmark is exceeded, then logic configured to block orders from the same user and in the same currency pair (or other grouping, such as the same security or type of security) are removed from the system at Block 714. In addition, a flag is set to block all orders of the same currency pair from the same user until the system is again stable, *e.g.*, enough orders are received in less time than the benchmark to establish system stability.

Advantageously, the temporal stability filter 702 of the present invention is capable of determining whether orders originate from, or have passed through, stable systems. For example, the temporal stability filter protects market participants in cases where their rates are not reaching the platform 13 in a specified time. Upon detection of excessive latency when an event occurs relative to an order (*e.g.*, when it is first received), current orders on the platform from the user are canceled and future orders from the user rejected under stability has been reestablished.

A further embodiment of the invention allows the trader to enable any combination of the filters described above for a particular transaction or group of transactions. For example, the trader may want to have the inverted market filter and the choice market filter selected at all times to avoid making bids that are equal to or above the best offer price. Additionally, the trader may want to be able to make skewed bids or offers but have the expected range filter apply after the skewed bid or offer is accepted. Furthermore, the trader may want to ensure that the same opposite party trader does not buy and sell the bank's offers and bids at the same time or within a minimum time interval in addition to having the protections from the expected range filter and the inverted market and choice market filters.

As discussed above, embodiments of the trading system of the present invention may be configured to receive and/or process messages, for example, in the recording system 20 of Figure 1, indicating, amongst other things, bids and/or offers, reserve quantities, and the use and configuration of filters in determining matches for the bids/offers. In one embodiment, the bid/offer messages within the recording system 20 are in the form of electronic messages in a standardized format. This includes bids/offers originally generated in standardized electronic form, bids/offers generated in another form and converted to standardized electronic messages before reaching the recording system 20, and bids/offers generated in another format and converted at the recording system, which is configured to perform such a conversion. Advantageously, the bids/offers in standardized electronic format may be communicated to other platform systems.

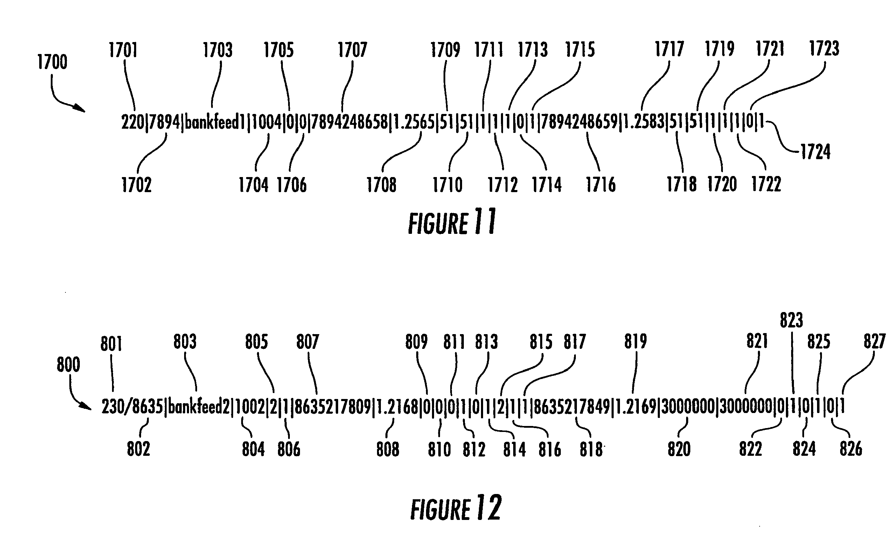

Referring to Figure 11, therein is illustrated one possible message format, a single-layer feed message format. The message includes an alphanumeric string which has several fields separated by pipes "|". These fields include, in order, a message type field 1701, an account field 1702, a user identification field 1703, an instrument identification field 1704, a bid cancellation field 1705, an offer cancellation field 1706, a new bid request field 1707, a new bid price field 1708, a new bid quantity field 1709, a new bid show quantity field 1710, new bid filtering instructions 1711-15, a new offer request field 1716, a new offer price field 717, a new offer quantity field 1718, a new offer show quantity field 1719, and new offer filtering instructions 1720-24.

The single-layer feed message may prevent accumulation over time of automatically generated price feeds and maintain price feeds at a single layer. These may be accomplished at least in part by providing for cancellation of previous bids and offers via the bid cancellation field 1705 and the offer cancellation field 1706. If the cancellation fields 1705 and 706 are zero, then no cancellation is made. If other than zero, then additional price 1708, quantity 1709, and show quantity 1710 fields are generated to facilitate identification of the bid or offer to be cancelled. The other fields, as is evident from their names, identify the type of message as a bid or offer generated by automation, the account on which the deal is made, the trader making the trade, the financial instrument (*e.g.*, the currency pair), and the price, quantity and reserve quantity for the new bid or offer.

Multi-layer feed messages, on the other hand, allow for submission of multiple bids and offers and do not provide for cancellation of previous offers, as shown in Figure 12. As a result, previous bids and offers remain available for matching, for example, by remaining available on the trading platform 13 of Figure 1 for matching by the matching engine 22. Fields 801 through 804 are the same for the multi-layer feed as the single-layer feed. The multi-layer feed message format includes a number of requests field 805 that identifies the number of bids or offers to follow, which, in the illustrated example, is equal to two. As is indicated by the number of requests field 805 ("2" in the illustrated embodiment), each of two groups of fields include a buy/sell identification field 806, 817, a request identification field 807, 818, a price field 808, 819, a quantity field 809, 820, a show quantity field 810, 821, a skew amount field 811, 822, and filtering instruction fields 812-16, 823-27. The number of requests field, however, can include a single group or more than two groups.

Regardless of whether a single-layer or multi-layer feed message, the messages may include an additional time stamp field 901 in which is recorded a string, number or other data indicating a time at which the new rate was issued, as shown in Figure 20. This time stamp field could have other positions, and could be added to other types of messages, such as the single and multi-layer feed messages shown in Figures 11 and 12. The end position is preferred, however, since this data is most likely to be added immediately prior to dispatch of the message to the trading platform 13. In another aspect, multiple time stamps may be continuously added by the different systems that the message passes through on the way to the trade restrictor 21, matching engine 22 or other system of the trading platform 13, or even some other system of the computerized trading platform 10.

The term "timestamp" as used herein in reference to messages, and in particular in reference to bids and offers, describes any data or other information that directly, or indirectly, indicates a time or sequence associated with some event, such as a change, creation, passage through a gateway, into, through or out of a particular computer or system. The timestamp may be directly associated with the message via an alphanumeric code as described in the embodiment above. The timestamp may be stored elsewhere and may be indexed to the message by being correlated to identifying information within the message. Also, the timestamp may be some characteristic of the message, or artifact of the message, that results or indicates an order or time at which an even occurred to the message relative to some other message. Timestamps herein, therefore, need not be precise or exact and may only indicate an order or sequence of the event(s) associated with the message.

The term "message" as used herein refers to any group of data or information configured to provide information or perform some function or otherwise communicate between and within systems of the trading platform 10. Notably, messages can have one or more manual components, as can the timestamps. Also, the data or information need not be contained within a single packet, travel in tight association or be located on any one particular computer, system or portion thereof.

Message formats as shown above may facilitate functioning of embodiments of the trading system of the present invention. For example, referring to the trading system 10 of Figure 1 and the method illustrated in Figures 13a and 13b, the determination of selected filter requirements at Block 115 can be accomplished via filter and filter parameter indicators 1711-15, 1720-24, 812-16 included in the bid/offer message and read by trade restrictor 21. More specifically, message fields 1711-15 for single-layer feed bid messages, fields 1720-24 for single-layer feed offer messages, and fields 812-16 for multi-layer feed bid/offer messages can each represent one of the filters described earlier in relation to Figures 15-19. In one embodiment, fields 1711, 1720, and 812 represent the inverted market filter, fields 712, 721, and 813 represent the choice market filter, fields 1713, 1722, and 814 represent the expected range filter, fields 1714, 1723, and 815 represent the intentional skew filter, and fields 1715, 1724, and 816 represent the time interval filter. For most of these fields, if the value in the field is "0," the filter would be turned off, and if the value of the field is "1," the filter would be turned on. For some of the filters, any amount in the field greater than zero indicates a value to be used by the filter, such as for the intentional skew filter.

Referring to Figures 11, 12, and 18, an example of how a skew request can be detected and generated by the intentional skew filter 500 is now provided. Filter 500 may be configured to parse the bid or offer message to determine whether the user wants to skew the bid or offer amount. For example, fields in the single-layer feed 1700 may indicates the amount by which a single-layer feed bid and offer should be skewed, and a field in multi-layer feed 800 may indicate the amount by which a multi-layer feed bid or offer should be skewed. The number in the skew fields indicates the amount by which the price bid or offer should be skewed. For example, if the skew field is 1, 2, or 3, then the amount should be skewed by 1, 2, or 3 pips, respectively. If a bid is skewed, the amount will be increased by the amount of pips, and if an offer is skewed, the amount will be decreased by the amount of pips. If the skew field is 0, then the amount is not skewed. If the user does not want to skew the bid, the skew fields are equal to zero. In addition, if the bid or offer amount to be skewed is in a multi-layer feed bid or offer, the skew field is reset to zero after the skewed amount is booked, thereby returning the amount of the bid or offer to the pre-skew amount.

The message formats of Figures 11 and 12 may facilitate other functions of the trading system of the present invention. For example, referring again to the trading system 10 of Figure 1 and the method illustrated in Figures 13a and 13b, unmatched residual quantities from previous matches are calculated at Block 111. In one embodiment, the matching engine 22 may be configured to calculate the unmatched quantity using quantity fields 709, 809, 820 of the bid and offer. As yet another example, message type fields 701, 801 can allow the matching engine 22 to reconfirm, at Block 107, that at least one of the bid/offer are not automated by simply rechecking those fields.

Examples of GUIs useful in facilitating the above-described systems and methods for currency trading are shown in Figures 2-10. For instance, the trading platform can employ a GUI as shown in Figure 2, the GUI including a trade entry screen 25, an open positions screen 26, a deal log 27 and a credit screen 28. The trade entry screen 25 may include one or more rows, each of which displays information for a particular currency pair (*e.g.*, EUR/USD for Euros and U.S. Dollars, and USD/JPY for U.S. Dollars and Japanese Yen). Each of the rows can include a centrally located dealing area which is separated into a bid side (left) and an offer side (right). An innermost pair of boxes includes a best bid price box 29 on the left and a best offer price box 30 on the right. These price boxes display the best bid and offer available to the trader and clicking on one of the price boxes allows the trader to hit or lift the best bid or offer.

Upon clicking on the best bid or offer price boxes 29, 30, a hit/lift window 41 may appear, as shown in Figure 5, unless the single or double-click dealing mode described below is employed, in which case the hit/lift window 41 is skipped. The hit/lift window is labeled "sell" if the trader hit the bid, or is labeled "buy" if the trader lifted the offer. The hit/lift window 41 shows a price 42 and an amount 43 at which the trader will be dealing, that amount being the best bid or offer at the time the price box 29 or 30 was hit. A send button 44 allows the trader to submit the bid or offer to the bid and offer recording system 20. The trader workstation may alternatively be configured so that a single or double click on the best bid or offer price boxes 29, 30 immediately sends the offer without displaying the hit/lift window. In this case, a trade confirmation window 45 can be immediately displayed, as shown in Figure 6. It should be noted that the terms "bid" and "offer" as used herein denote all types of bids and offers, and therefore encompass hits and lifts.

Adjacent to the price boxes on either side are a bid button 31 (left side) and an offer button 32 (right side). Selecting these buttons allows the trader to respectively enter a new bid or offer such as by opening a bid box 36 or an offer box 40, as shown in Figures 3 and 4, respectively. In the best bid box appears the current market price with the cursor over the smallest increments. Up and down arrows 36 allow adjustment of the bid price. Clicking or tabbing on an amount box 37 allows the amount to be changed. A reserve amount can be set by selecting and changing a show box 38. Otherwise, the show box will default to the amount in the amount box 37. Clicking on a send button 39 submits the bid to the bid and offer recording system 20. The offer box 40 operates with all the same functionality of the bid box 36, except that an offer is being made.

Each of the rows of the trade entry screen 25 also contains market information areas 33 that are on either side of the buttons 31, 32. On the left, the market information area shows bid information, while the market information area on the right shows offer information. The market information includes the number of orders and total amount of all the orders at a particular price and currency pair. Orders placed by the trader workstation on which the trade entry screen 25 is being shown, are shown in yellow. Prices in the market information areas 33 that are within 10 points of the best price are shown in a white background and if more than 10 points from the best price are shown in a black background. Vertical bars 34 are scaled to the amount available at that price, with a numeric indication is inside the bars while the number of participants making up a bid or offer is indicated above the vertical bar. Optionally, the vertical bars may also be color coded to reflect the total amount. As another option, trades that have been restricted by the trade restricting system 21 may be displayed, but not accessible for hitting and lifting by bank trader workstations 14. For instance, automated price feeds from other banks may be displayed on the bank trader workstation in gray to indicate inaccessibility.

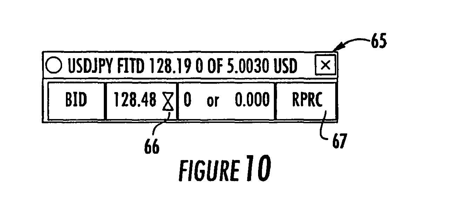

Figure 10 illustrates a re-price balance window 65 which is displayed when the trader selects the order placed from the workstation (displayed in yellow) in the market information areas 33. The re-price balance window 65 includes up and down arrows 66 next to a display of the price of the original bid or offer and a re-price button (RPRC) 67. The up and down arrows 66 allow the price for the remaining balance of a bid or offer to be changed, and hitting the re-price button 67 submits this change to the memory 80.

In the embodiment illustrated above, the change is submitted as a message (such as the messages shown in Figures 11 and 12) containing the new price for the remaining quantity and cancellation instructions for the previous bid or offer. The advantage of using the re-price function is that a new bid or offer is submitted and replaces the original bid or offer for the remaining outstanding quantity of the bid or offer without having to cancel the previous bid or offer, calculate the remaining balance manually and then submit a new bid or offer. Notably, if none of the quantity of the bid or offer has been matched, then essentially the entire bid or offer has been repriced. Also, the trading platform 13 may be configured to replace the price of a pending bid or offer with the new price of the bid or offer, without a cancellation, maintaining its place in the queue for instances wherein bids and offers are matched in the order received.

Referring again to Figure 2, the open positions screen 26 lists current obligations of the trader by currency pair and also includes a plurality of data fields aligned with each currency pair including a position field 52, an average price field 46, a market price field 47, a profit/loss field 48, a test price field 49, a test profit/loss field 50 and a counter position field 51. Displayed in the position field 52 are the current long or short obligations for that currency pair for the trader. The average price field 46 indicates the average price for all deals transacted for the currency pair for that trading day. In the market price field 47, the market price for that currency is displayed.

The profit/loss field 50 is configured to display a calculated difference in the price at which the position was established and the current market price for the position, *i*.*e*., the profit or loss on the position if it were closed at the current price. In response to entry into the test price field 49 of a hypothetical price, the test profit/loss field 50 is configured generate a theoretical profit or loss on the position based upon that price. In other words, it allows the trader to see what the affect on his position would be if the market were to move to different levels. This is similar to the profit/loss field 50 but using the hypothetical price. The counter position field 51 shows the equivalent amount of the secondary currency, long or short.

The deal log 27 also includes several data fields, each group of data fields corresponding to recent transactions for currency pairs in chronological order, as shown in Figure 2. The fields include a buy/sell field 53, an amount field 54, a rate field 55, a secondary amount field 56, a deal number field 57, date and time fields 58, an aggregate field 59 and a value date field 60. The buy/sell field 53 indicates whether the transaction is a purchase or sale of the currency pair. The amount field 54 is the amount of the transaction in the selected base currency. The rate field 55 indicates the exchange rate at which the transaction was matched. The secondary amount field 56 describes the amount of the transaction in the secondary currency of the currency pair. A unique deal number associated with the deal is listed in the deal number field 57. The date and time fields 58 indicate the exact date and time the transaction was matched by the matching engine 22. The aggressor field 59 will contain a yes/no value which indicates whether the client was aggressive or passive on the trade. The value date field 60 contains the settlement date, which is the day upon which each party in the trade must deliver the respective amount of currency.

The credit screen 28 includes a maximum credit exposure field 62, an actual credit exposure field 63 and an available credit exposure field 64. The maximum credit exposure field 62 indicates the limit of credit extended to the trader by the trader's bank. Actual credit exposure is the credit exposure from the current positions of the trader and is displayed in the actual credit exposure field 63. The available credit exposure field 64 is configured to list the difference between fields 62 and 63, which is the amount of credit that the trader may use in future deals. Any transactions that exceed these amounts will be blocked by the matching engine 22.

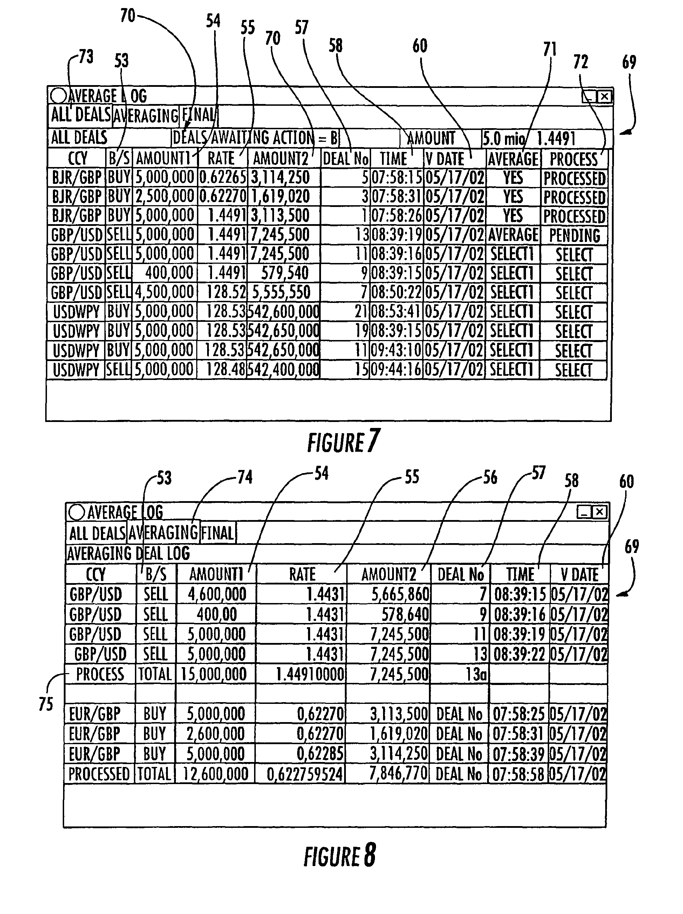

Selection of a functions pull-down menu 68 (as shown in Figure 2) reveals an option to open an average log screen 69, as shown in Figure 7. The average log screen includes an all deals tab 73 configured to display some of the same fields as the deal log 27, including the buy/sell field 53, the amount field 54, the rate field 55, the secondary amount field 56, the deal number field 57, the time field 58 and the value date of the deal field 60.

In addition to these fields, the average log screen 69 includes a deals awaiting action listing 70, an average indicator field 71 and a processing status field 72. The deals awaiting action listing 70 is configured to display the number of deals that have been matched by the matching engine 22 but have not yet been included in an averaging or designated as individual trades. In the average indicator field 71, deals are described as either "select," indicating that the deal is capable of selection for averaging, "average," indicating that the deal has been selected for averaging and "yes," indicating that the deal was processed using the averaging function. In the processing status field 72, deals can be described as "select," meaning the deal has not yet been processed and is selectable for averaging, "pending," meaning that the deal has been selected for averaging and "processed," meaning that the deal has been processed.

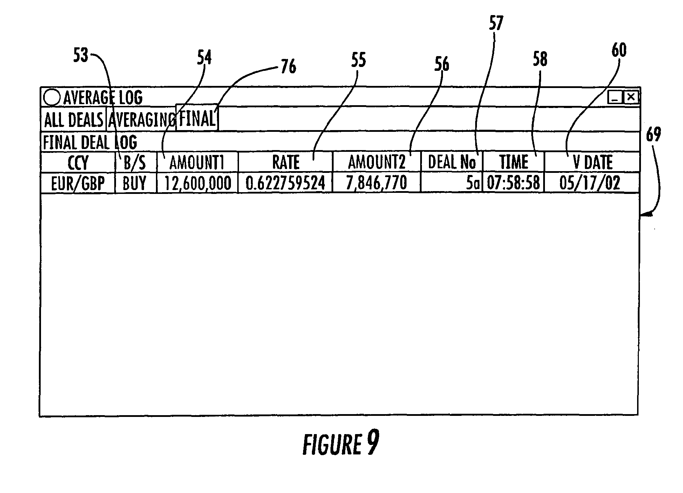

Selection of the "select" indicator in the average indicator field 71 changes the indicator to "average," which prepares the deal for processing on an averaging tab 74 of the average log screen 69, as shown in Figure 8. The averaging tab 74 of the average log screen 69 includes trades ready for processing grouped by currency pair and whether they are buy, or sell, transactions. A process selection field 75 is associated with an averaged transaction that includes a new deal number (which in the illustrated embodiment is the number of the latest deal with an appended a, *e.g*., "13a") in the deal number field 57, the average rate in the rate field 55 and the total amount of all of the deals in the primary and secondary amount fields 54, 56.

Selection of the process selection field 75 then submits the deals to the settlement system 17 for processing either as a batch for the entire amount at the average price, or alternatively, for processing singly in the original deal amounts but at the new, averaged price. Notably, because the bank is the intermediary that books the trades with other banks, the trader is free to batch averaged trades for clearance regardless of whether bank or trade with which the deal has been made is the same for all deals. In addition, the alternative of processing of the trades singly, but at the averaged price simplifies clearance while still allowing the identity of the original trades to be documented and maintained. Regardless of how the trade is processed, a final tab 76 of the average log screen 69 lists the processed trades in batched, averaged form for simplicity, as shown in Figure 9.

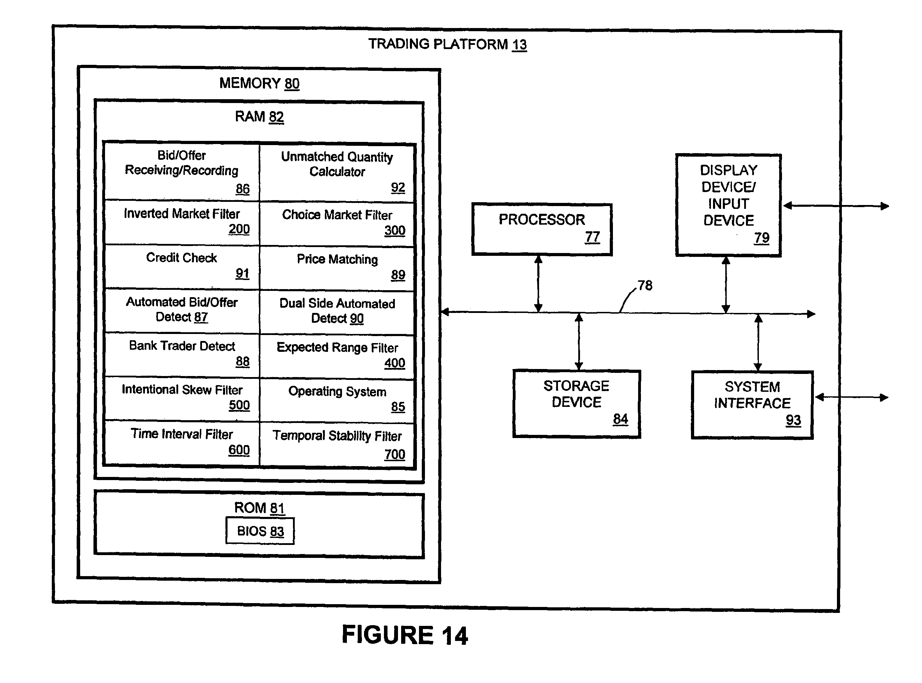

An exemplary architecture for implementing a computerized trading platform, such as the embodiment of the trading platform 13 illustrated in Figure 1, is shown in Figure 14. The trading platform includes a processor 77 that communicates with other elements within the trading platform, or the computerized trading system 10, via a connector or bus 78. Also included in the trading platform 13 is a display device/input device 79 for receiving and displaying data. The display device/input device may be, for example, a keypad or pointing device that is used in combination with a display screen. The trading platform 13 further includes memory 80, which may incorporate both read only memory (ROM) 81 and random access memory (RAM) 82. The ROM 81 can be used to store a basic input/output system (BIOS) 83, the BIOS containing the basic routines utilized in transferring information between elements within the trading platform 13.

Trading platform 13 may also include at least one storage device 84, such as a hard disk drive, a floppy disk drive, a CD-ROM drive, or optical disk drive, for storing information on various computer-readable media, such as a hard disk, a removable magnetic disk, or a CD-ROM drive, or optical disk drive. As will be appreciated by one of ordinary skill in the art, each of these storage devices 84 is connected to the system bus 78 by an appropriate interface. The storage devices 84 and their associated computer-readable media provide non-volatile storage for the trading platform 13. It is important to note that the computer-readable media described above could be replaced by any other type of computer readable media known in the art. Such media include, for example, magnetic cassettes, flash memory cards, digital video disks, and Bernoulli cartridges.

A number of program modules may be stored by the various storage devices, such as within RAM 82 (as shown in Figure 14) or within the storage device 84 (for clarity, storage of program modules in storage device 84 is not shown). Such program modules include an operating system 85, a bid/offer receiving and/or recording module 86, an automated bid/offer detection module 87, a bank trader detection module 88, a price matching module 89, a dual side automated bid/offer detection module 90, a credit checking module 91, an unmatched quantity calculation module 92, an inverted market filtering module 200, a choice market filtering module 300, an expected range filtering module 400, an intentional skew filtering module 500, a time interval filtering module 600, and a temporal stability module 700. The modules control certain aspects of the operation of the trading platform 13, as is described above, with the assistance of the processor 77 and the operating system 85. While described as separate modules, these functions may, instead, be integrated.

Also located within the trading platform 13, is a system interface 93 for interfacing and communicating with other elements of the computerized trading system 10. It will be appreciated by one of ordinary skill in the art that one or more of the computerized trading system's components may be located geographically remotely from other computerized trading system components. Furthermore, one or more of the components may be combined, and additional components performing functions described herein may be included in the computerized trading system.

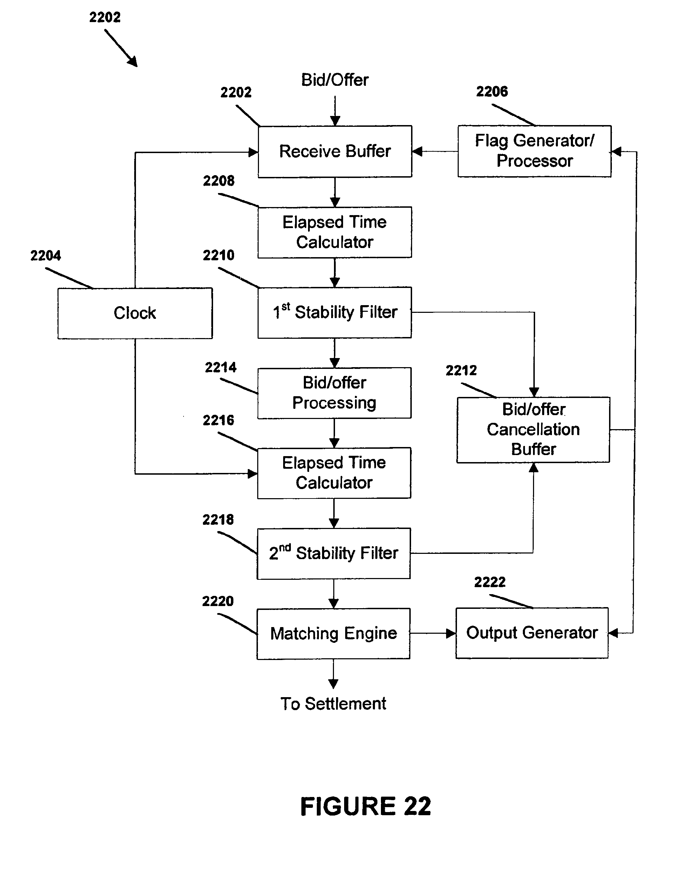

Referring to Figure 22, therein is shown a system 2200 configured for implementing a trading platform, such as computerized trading platform 13 of Figure 1, in accordance with an embodiment of the present invention, the trading platform being capable of performing temporal stability filtering. The system, for example, may be at least partially embodied in a conventional computer, in a manner similar to that shown in Figure 14. The system 2200 includes a receive buffer 2202 that receives, and perhaps temporarily stores, bids/offers, possibly as part of the bid/offer recording system 20 (Figure 1). Receive buffer 2202 may be located at the system interface 93 (Figure 14), in memory 80 (Figure 14), or elsewhere. A clock 2204, perhaps associated with processor 77 (Figure 14), communicates with the receive buffer 2202 and generates time stamps that may be associated with incoming bids/offers. A flag controller 2206 also communicates with the receive buffer 2202, serving to associate indicators, or flags, with incoming bids/offers as required. The circumstances under which flag generator does associate a flag with an incoming bid/offer are discussed in detail below.

Receive buffer 2202 is in communication with elapsed time calculator 2208. The bids/offers, including associated time indications from clock 2204, may be received at calculator 2208 for determination of the elapsed time between an earlier time associated with the bid/offer, such as the time of creation of the bid/offer, and arrival at system 2200. This can be accomplished, for example, through the receipt and parsing by the calculator 2208 of a standardized electronic message containing a series of time stamps. Elapsed time information determined by calculator 2208 is passed to first stability filter 2210, which is in communication with elapsed time calculator 2208. The first stability filter 2210 is configured to compare the elapsed time to a benchmark or threshold to determine whether the order is stale and likely indicative of an unstable system somewhere between the creation of the order message and its receipt by the receive buffer 2202. The first stability filter 2210 is also configured to check for a flag associated with the bid/offer by the flag generator/processor 2206 in a manner discussed below.

If the first stability filter 2210 determines either that the bid/offer is stale or includes a flag, the bid/offer is communicated to the bid/offer cancellation buffer 2212, which blocks or cancels the order. Cancellation buffer 2212 may store the message for subsequent processing and/or disposition. Cancellation buffer 2212 also indicates to flag generator/processor 2206 that an offer has been cancelled or that a flag has been encountered. The flag generator/processor 2206 can then update flag information for incoming bids/offers, either instituting a flag for a certain user, continuing to incorporate a flag with the orders of a specified user, or discontinuing the incorporation of a flag in the orders of a specified user. The flags can indicate, for example, that the order associated with the message exceeding the benchmark should be blocked and that all or a portion of current orders in system 2200, or on the platform 13, from the same user (such as those order messages sharing the same username in a username field) should be collectively cancelled. Flag generator/processor may be configured to include flags, for example, user-related stability is indicated, such as when the timestamps indicate messages that no longer exceed the benchmark. Alternatively, flag generator/processor may determine a number of counts or increments at which the flag is detected before beginning to allow the order messages to pass through. If the order message passes the initial time check a reset count is reduced by one. This process is repeated with each time check under the threshold until the count is at zero before the order messages are allowed to pass through.

First stability filter 2210 can communicate un-rejected orders to a bid/offer processing module 2214, where bids/offers can, for example, be subjected to further filtering. Following this processing, bids/offers may be communicated by the processing module 2214 to elapsed time calculator 2216 and second stability filter 2218. Elapsed time calculator 2216 is also in communication with clock 2204, and is configured to determine a measure of time with respect to the bid/offer at issue, such as total time since creation, time required for processing, or some other time. This determination of elapsed time may involve, for example, including a third time stamp in the message at issue and then comparing the third time stamp with either the first (incoming) time stamp or the second time stamp (from the clock 2204). Second stability filter 2218, like first stability filter 2210, is configured to determine whether the order is stale and likely indicative of instability, now in the processing module 2214. Elapsed time calculator 2216 and second stability filter 2218 may be configured similar to calculator 2208 and first stability filter 2210, respectively.

If the second stability filter 2218 determines that the bid/offer is stale, the bid/offer is communicated to the bid/offer cancellation buffer 2212, which blocks or cancels the order. Cancellation buffer 2212 indicates to flag generator/processor 2206 that an offer has been cancelled or that a flag has been encountered. The flag generator/processor 2206 can then update flag information to flag for blocking all orders of the same currency pair from the same user until the system is again stable, *e.g.*, enough orders are received in less time than the benchmark to establish system stability.

If a bid/order is not blocked due to interaction with the first and second stability filters, the message can be communicated to the matching engine 2220 for matching and ultimate settlement. Matching engine 2220 can communicate with an output generator 2222 that governs reporting of matching activity to, for example, users and/or other systems. Bid/offer cancellation buffer 2212 is also in communication with output generator 2222, and this allows for notification of blocked and/or canceled orders.

It is noted that most, if not all, of the elements of system 2200 can be integrated, and can be carried out by a conventional computer. Specifically, a combination of a processor and a set of instructions executable by the processor can be used to perform checks for flags, determine elapsed time, match bids and offers, and generate outputs. Alternatively, each of the elements of system 2200 can be associated with separate hardware and/or software.

Various figures of the present application include block diagrams, flowcharts and control flow illustrations of methods, systems and program products according to the invention. It will be understood that each step or block of the block diagram, flowchart and control flow illustration, and combinations of blocks in the block diagram, flowchart and control flow illustration, can be implemented by computer program instructions. These computer program instructions may be loaded onto, or otherwise executable by, a computer or other programmable apparatus to produce a machine, such that the instructions which execute on the computer or other programmable apparatus create means for implementing the functions specified in the block diagram, flowchart or control flow block(s) or step(s).

These computer program instructions may also be stored in a computer-readable memory that can direct a computer or other programmable apparatus to function in a particular manner, such that the instructions stored in the computer-readable memory produce an article of manufacture including instruction means which implement the function specified in the block diagram, flowchart or control flow block(s) or step(s). The computer program instructions may also be loaded onto a computer or other programmable apparatus to cause a series of operational steps to be performed on the computer or other programmable apparatus to produce a computer implemented process such that the instructions which execute on the computer or other programmable apparatus provide steps for implementing the functions specified in the block diagram, flowchart or control flow block(s) or step(s).

Accordingly, blocks or steps of the block diagram, flowchart or control flow illustration support combinations of means for performing the specified functions, combinations of steps for performing the specified functions and program instruction means for performing the specified functions. For example, Figure 1 shows the GUI generator 23 for generated the various GUIs illustrated herein, the matching engine 22 for matching bids and offers and the automated price feed generator 16 for automatically generating a feed of bids and offers. It will also be understood that each block or step of the block diagram, flowchart or control flow illustration, and combinations of blocks or steps in the block diagram, flowchart or control flow illustration, can be implemented by special purpose hardware-based computer systems which perform the specified functions or steps, or combinations of special purpose hardware and computer instructions.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An electronic trading system comprising:
means for receiving bids and offers from a plurality of remote traders over a communication network;
means for storing user data for each trader, the user data including temporal stability data indicative of a current temporal stability in the communication network between the trading system and the trader who made the bid or offer;
means for identifying a trader of the plurality of traders who made at least one bid or offer of the bids and offers;
means for retrieving the stored temporal stability data associated with the identified trader;
means for filtering the received bids and offers to remove bids and offers in dependence upon the retrieved temporal stability data; and
means for matching received bids or offers that are not removed by said filtering means with the offers or bids of other traders.

2. An electronic trading system according to Claim 1, wherein the bids and offers are associated with one or more messages and further comprising means for extracting the temporal stability data from the one or more messages.

3. An electronic trading system according to Claim 1 or 2, wherein at least one bid or offer of the bids and offers is associated with a message that further includes first time stamp data indicative of a time of placement of the at least one bid or offer, and further comprising means for generating second time stamp data indicative of a time at which the at least one bid or offer is received by said receiving means, and wherein the filtering means is configured to determine a delay between the first and second timestamps of the at least one bid or offer and restrict booking of the bids and offers based on the delay.

4. An electronic trading system according to Claim 1, 2 or 3, further comprising means for modifying user data for each trader to update the temporal stability data.

5. An electronic trading system comprising:
means for receiving bids and offers from a plurality of remote traders over a communication network, each bid or offer having associated first time stamp data indicative of a time that the bid or offer was made;
means for generating second time stamp data indicative of a time at which the bid or offer is received by said receiving means;
means for comparing the first time stamp data associated with the received bid or offer with the second time stamp data associated with the received bid or offer to generate a comparison result;
means for filtering the received bids and offers to remove bids and offers in dependence upon their associated comparison result; and
means for matching received bids or offers that are not removed by said filtering means with the offers or bids of other traders.

6. An electronic trading system according to Claim 5, further comprising means for identifying a trader of the plurality of traders who made at least one bid or offer of the bids and offers.

7. An electronic trading system according to Claim 6, further comprising means for associating the comparison results with the trader who made the at least one bid or offer and for storing the results as user data associated with the trader.

8. An electronic trading system according to Claim 7, wherein said means for associating and storing results is configured to modify the user data when the associated comparison results change.

9. An electronic trading system according to Claims 1 or 5 or any claim dependent thereon, wherein said filtering means includes a processor.

10. An electronic trading system comprising:
means for receiving bids and offers from a plurality of remote traders over a communication network, each bid or offer having associated first time stamp data indicative of a time that the bid or offer was made;
means for generating second time stamp data associated with each received bid or offer indicative of a time at which the associated bid or offer was received by said receiving means;
means for storing user data for each trader, the user data including temporal stability data indicative of a current temporal stability in the communication network between the trading system and the trader who made the bid or offer;
means for identifying the trader who made the bid or offer;
means for retrieving the stored temporal stability data associated with the identified trader;
first filtering means for filtering the received bids and offers to remove bids and offers in dependence upon their retrieved temporal stability data;
means for comparing the first time stamp data associated with each bid or offer with the associated second time stamp data, to generate a comparison result associated with the bid or offer;
means for updating the stored temporal stability data associated with the trader who made the bid or offer in dependence upon the associated comparison result;
second filtering means for filtering the received bids and offers that are not removed by said first filtering means to remove bids and offers in dependence upon their associated comparison result; and
means for matching received bids or offers that are not removed by said first or second filtering means with the offers or bids of other traders.

11. An electronic trading system according to Claim 3, 5, or 10 or any claim dependent thereon, wherein said means for generating second time stamp data includes a clock.

12. An electronic trading system according to Claim 11, wherein the clock is associated with a processor.

13. An electronic trading system according to Claims 7, 8, or 10 or any claim dependent thereon, wherein said filtering means is further configured to remove bids and offers in dependence upon the user data.

14. An electronic trading system comprising:
means for receiving bids and offers from a plurality of remote traders over a communication network, each bid or offer having associated first time stamp data indicative of a time that the bid or offer was made;
first generating means for generating second time stamp data associated with each received bid or offer indicative of a time at which the associated bid or offer was received by said receiving means;
means for comparing the first time stamp data associated with each bid or offer with the associated second time stamp data, to generate a first comparison result associated with the bid or offer;
first filtering means for filtering the received bids and offers to remove bids and offers in dependence upon their associated first comparison result;
processing means for processing the bids and offers that are not removed by said first filtering means and for outputting each bid or offer after processing;
second generating means for generating third time stamp data associated with each bid or offer indicative of a time at which the associated bid or offer is output from said processing means;
means for comparing the first or second time stamp data associated with each bid or offer with the associated third time stamp data, to generate a second comparison result associated with the bid or offer;
second filtering means for filtering the bids and offers to remove bids and offers in dependence upon their second comparison result; and
means for matching received bids or offers that are not removed by said second filtering means with the offers or bids of other traders.

15. An electronic trading system according to Claim 14, comprising means for setting a first flag in dependence upon the first comparison result and means for setting a second flag in dependence upon the second comparison result and further comprising means for preventing bids and offers from being passed to said matching means in dependence upon the status of said first and second flags.

16. An electronic trading system according to Claim 14 or 15, wherein said first and second means for generating respective second and third time stamp data includes a clock.

17. An electronic trading system according to Claim 16, wherein the clock is associated with a processor.

18. An electronic trading system according to Claims 10 or 17 or any claim dependent thereon, wherein said first and second filtering means includes a processor.

19. An electronic trading system according to Claims 1, 5, 10, or 14 or any claim dependent thereon, wherein said receiving means includes a computer configured to communicate over a communication network.

20. A method of restricting bids and offers in a computerized trading system, said method comprising:
recording bids and offers including at least a timestamp; and
restricting booking of bids and offers based on the timestamp of each of the bids and offers.

21. A method of Claim 20, wherein restricting booking includes blocking the bids and offers from matching.

22. A method of Claim 21, further comprising associating a second timestamp with each of the bids and offers and determining a delay between the first and second timestamps and wherein restricting booking includes restricting booking based on the delay.

23. A method of Claim 22, wherein restricting booking based on the delay includes comparing the delay with a predetermined threshold.

24. A method of Claim 23, wherein restricting booking includes blocking matching of bids and offers having the delay exceeding the predetermined threshold.

25. A method of Claim 24, further comprising screening the bids and offers based on additional criteria when the delay does not exceed the predetermined threshold.

26. A method of Claim 25, further comprising determining a second delay based on a third timestamp after screening the bids and offers and blocking bids and offers having the second delay exceeding a second predetermined threshold.

27. A method of Claim 26, wherein blocking bids and offers includes blocking bids and offers having a same source identity as one of the bids and offers having the first and second delay exceeding at least one of the first or second predetermined thresholds.

28. A method of Claim 27, further comprising discontinuing blocking of the bids and offers when the first and second delays no longer exceed the threshold.

29. A method of any of Claims 21 to 28, wherein blocking of the bids and offers includes blocking bids and offers having both the same source identity and a same currency pair.

30. A computer program product comprising computer implementable instructions for configuring a programmable computer device to perform the method of any of claims 20 to 29.
